# DEMANDE DE BREVET EUROPEEN

(11) **EP 1 069 354 A1**
(43) Date de publication de la demande: **17.01.2001**
(21) Numéro de dépôt: 00490027.0
(22) Date de dépôt: 07.07.2000
(51) Int. Cl.: F16K 15/14

(54) **Dispositif anti-retour**

(30) Priorité: 13.07.1999 FR 9909358
(71) Demandeur: WATTS EUROTHERM S.A., 80390 Fressenneville (FR)
(72) Inventeur: Jelloul, Eddy, 80100 Abbeville (FR); Bongrand, Laurent, 36400 Verneuil sur Igneraie (FR)
(74) Mandataire: Ecrepont, Robert

(57) **Abrégé**

L'invention se rapporte à un clapet pour le contrôle du passage d'un fluide.

Ce clapet est caractérisé en ce que la bague (2) comprend une zone (2A) médiane faiblement déformable et de part et d'autre de cette zone médiane deux lèvres (2B) qui, sous l'effet de la pression du fluide, se déforment en modifiant ainsi l'ouverture du Vé qui, au moins localement, s'écartent du siège pour laisser circuler au moins 50 % du débit du fluide en amont du clapet.

## Description

L'invention se rapporte à un clapet anti-retour pour le contrôle du passage d'un fluide, notamment, entre deux conduites amont et aval.

Elle se rapporte également à une cartouche thermostatique pourvu du dit clapet

Pour contrôler la circulation d'un fluide sur un réseau, par exemple hydraulique, on fait appel à un dispositif de contrôle qui, dans une position dite ouverte, permet le libre passage du fluide d'une conduite amont vers une conduite aval et, dans une seconde position fermée, interrompt cette circulation.

Une vanne est un dispositif de contrôle de cet écoulement mais elle nécessite une intervention volontaire soit manuelle, soit à l'aide d'un moyen moteur.

On connaît également un dispositif de contrôle de l'écoulement du fluide qui fonctionne sur le principe du différentiel de pression entre l'amont et l'aval.

Un tel dispositif est plus généralement connu sous le nom de clapet.

Classiquement, un dispositif de contrôle du type précité comprend :
- un obturateur et son siège avec l'une des deux faces de l'obturateur soumise à la pression du fluide pour tendre à écarter l'obturateur de son siège et le déplacer en position ouverte et
- un moyen moteur, tel un moyen élastique, qui développe une force prédéterminée pour, au contraire, appliquer l'obturateur sur son siège et le maintenir en position fermée.

Il existe deux types de clapets :
- dans le premier type (DE-943.088 ou BE-372.655), les dispositifs s'ouvrent sur un excès de pression en amont et sont, par principe, toujours maintenus sur leur siège et,
- le deuxième type de dispositif est dit anti-retour.

En fonctionnement normal, ce dispositif dit anti-retour est toujours ouvert et il ne revient sur son siège que si le différentiel de pression très faible entre l'amont et l'aval tombe sous une valeur prédéterminée.

Avec ces dispositifs anti-retour, l'important est de ne pas trop perdre de débit contrairement au dispositif fonctionnant en réponse à un effet de surpression où le problème est différent, ce qui nécessite donc la mise en oeuvre de moyens différents même s'ils sont ressemblants.

L'obturateur est , par exemple, réalisé en un matériau rigide et doit alors être, d'une part, guidé en translation et, d'autre part, équipé de moyens d'étanchéité.

Selon une autre forme de réalisation, l'obturateur est réalisé en un matériau souple, tel une membrane qui se déforme élastiquement.

Dans ce dernier cas, la membrane est alors fixée à sa périphérie et il n'est pas nécessaire de prévoir des moyens de guidage.

Un des résultats que l'invention se propose d'obtenir est de proposer un nouveau dispositif notamment compact.

A cet effet, l'invention a pour objet un dispositif de contrôle comprenant :
- un obturateur se présentant sous la forme d'une bague en matériau souple, située au regard d'une zone annulaire d'une pièce cylindrique de révolution, cette zone annulaire présentant, quant à elle, l'orifice de passage du fluide ainsi que le siège de l'obturateur de sorte que, lorsque la bague est déformée sous l'action du fluide, celle-ci s'écarte au moins localement de son siège afin que le fluide traverse radialement l'enveloppe de la pièce cylindrique,
- un moyen moteur, tel un moyen élastique, qui développe une force prédéterminée pour appliquer l'obturateur sur son siège et le maintenir en position fermée, et
- cette enveloppe cylindrique présentant des moyens pour maintenir la bague en regard de la zone annulaire tout en lui permettant de se déformer au moins localement,
ce dispositif étant caractérisé en ce que la bague comprend une zone médiane faiblement déformable et de part et d'autre de cette zone médiane deux lèvres qui, sous l'effet de la pression du fluide, se déforment en modifiant ainsi l'ouverture du Vé qui, au moins localement, s'écartent du siège pour laisser circuler au moins 50 % du débit du fluide en amont du clapet.

L'invention sera bien comprise à l'aide de la description ci-après faite à titre d'exemple non limitatif en regard du dessin ci-annexé qui représente schématiquement :

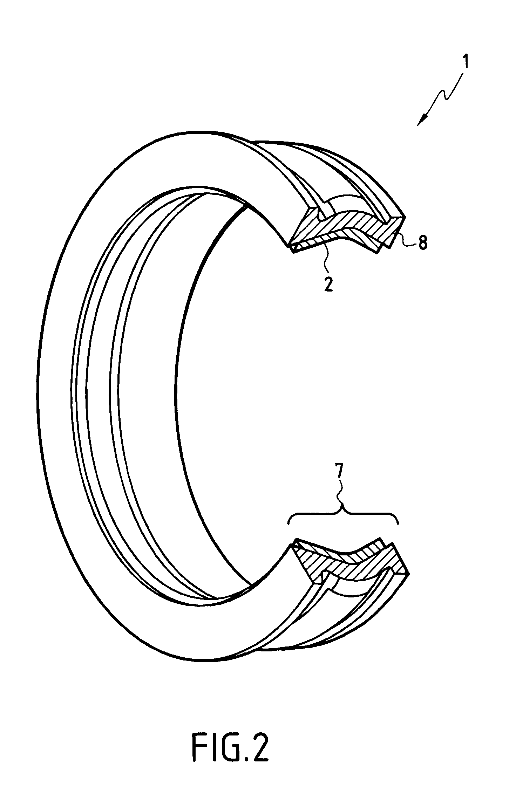

- figures 1 et 2 : vues axonométriques de différents exemples du dispositif selon l'invention,
- figure 3 : courbe débit pression avec et sans clapet,
- figure 4 : vue en coupe transversale du clapet anti-retour,

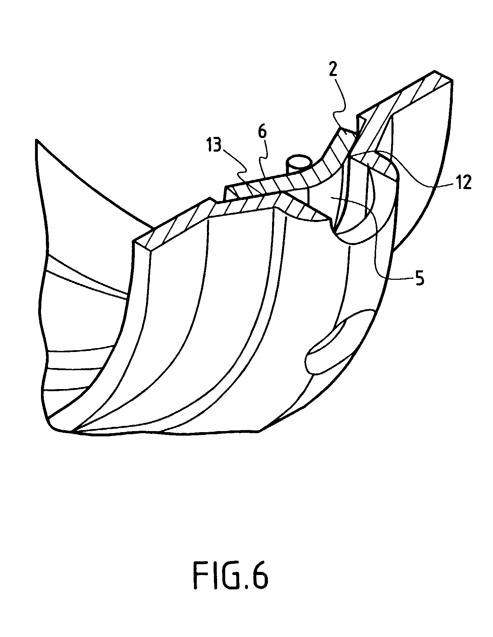

- figures 5 et 6 : vues en coupe et en gros plan d'un dispositif de contrôle ouvert et fermé,
- figure 7 : vue partielle en coupe d'un robinet.

En se reportant au dessin, on voit un dispositif 1 pour le contrôle du passage d'un fluide notamment entre deux conduites amont et aval ou entre deux chambres.

Ce dispositif de contrôle fonctionne comme un dispositif anti-retour.

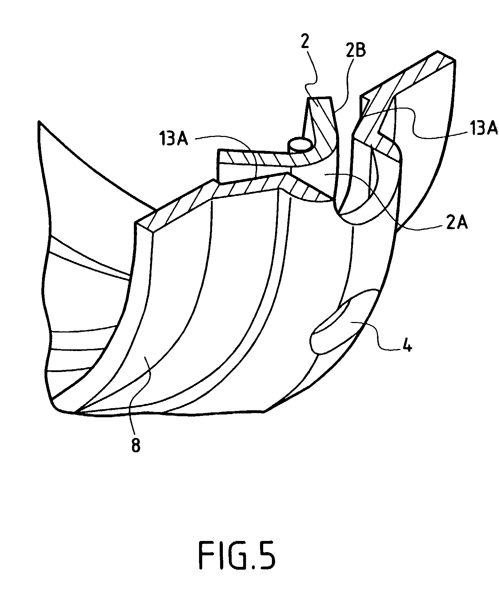

Classiquement, ce dispositif de contrôle comprend :
- un obturateur 2 en matériau souple et son siège 3 délimitant au moins indirectement une ouverture 4 pour le passage du fluide avec l'une (5) des deux faces 5, 6 de l'obturateur 2 soumise à la pression du fluide tendant à l'écarter de son siège et le déplacer en position ouverte (figure 5) et
- un moyen moteur, tel un moyen élastique, qui développe une force prédéterminée pour appliquer l'obturateur sur son siège et le maintenir en position fermée.

Le moyen moteur est intégré au dispositif et, par exemple, résultant de la nature même du matériau et/ou de sa forme, soit encore une combinaison des solutions précitées.

Cet obturateur se présente sous la forme d'une bague en matériau souple.

Selon une caractéristique de l'invention, la bague 2 comprend une zone 2A médiane faiblement déformable et de part et d'autre de cette zone médiane deux lèvres 2B qui, sous l'effet de la pression du fluide, se déforment en modifiant ainsi l'ouverture du Vé qui, au moins localement, s'écartent du siège pour laisser circuler au moins 50 % du débit du fluide en amont du clapet.

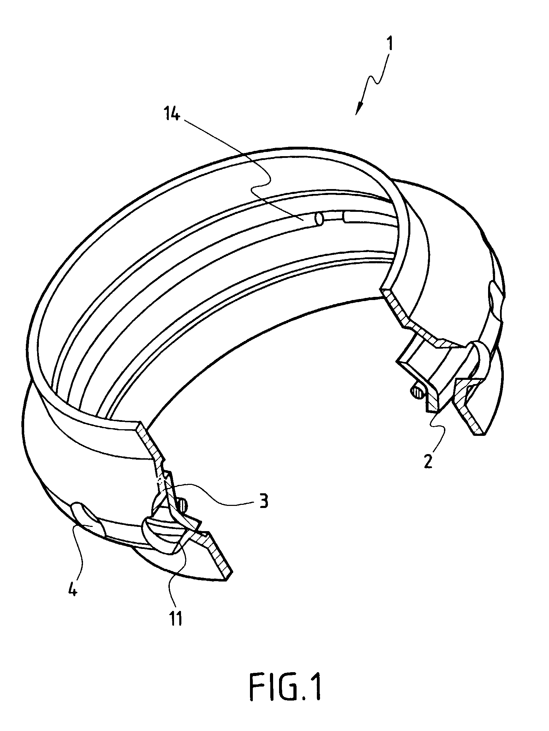

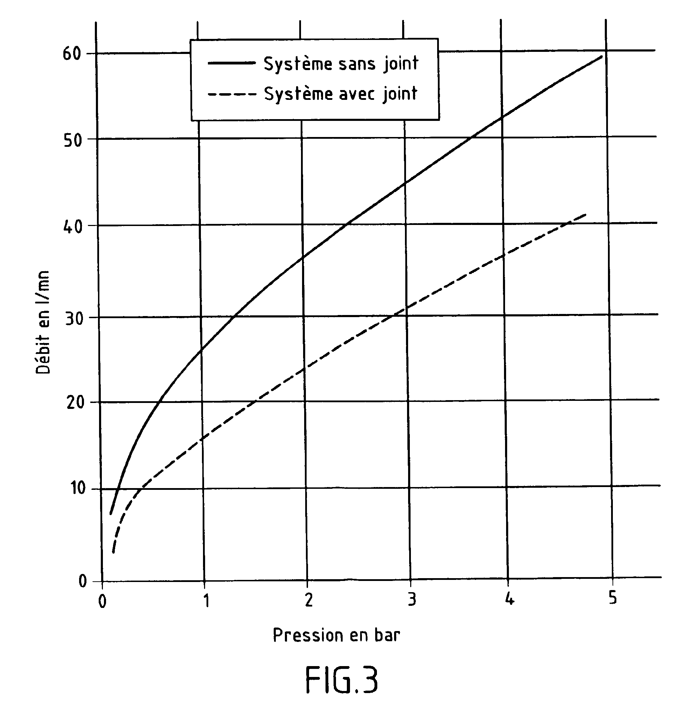

Dans la forme de réalisation représentée (figures 1, 3, 4), la bague 2 constituant l'obturateur est logée à l'intérieur de la pièce 8 cylindrique de révolution et est maintenue en regard de la zone annulaire par deux portées 13 A d'appui qui, depuis la face interne 10 de la pièce cylindrique, s'étendent vers l'axe de révolution de la pièce cylindrique pour former une gorge en Vé ouverte vers l'intérieur de la pièce cylindrique.

La concavité de cette gorge est suffisante pour maintenir le joint en place.

Dans cette forme de réalisation, la bague 2 présente en coupe transversale une section en Vé écrasé, la pointe du Vé étant tournée vers la face 10 interne de l'enveloppe cylindrique, cette bague comprenant une zone 2A médiane faiblement déformable et de part et d'autre de cette zone médiane deux lèvres 2B qui, sous l'effet de la pression du fluide qui s'exerce sur la face externe de la bague, se déforment en modifiant ainsi l'ouverture du Vé qui, au moins localement, s'écartent du siège pour laisser circuler le fluide.

Comparativement à la forme en Vé de la gorge, l'ouverture du Vé de la bague est supérieure à celle de la gorge précitée.

L'angle d'ouverture du Vé est de l'ordre de 130°.

De préférence, l'ouverture 4 pour le passage du fluide est présentée par le fond d'une rainure 11 circulaire réalisée depuis la face interne de la pièce cylindrique et, notamment, du fond de la gorge en Vé et les deux arêtes 12, qui délimitent l'entrée de la dite rainure circulaire, constituent en partie le siège de l'obturateur.

Le fond 13 de la gorge en Vé et, notamment, les deux zones 13A situées de part et d'autre de l'entrée de la rainure circulaire participent également à l'étanchéité.

Eventuellement, un jonc 14 formant un anneau rigide s'appuie sur la face interne de la bague au niveau de la zone médiane de la dite bague et permet de limiter la déformation de cette zone médiane.

La forme de la section de la bague et la nature du matériau peuvent être choisies pour combiner, si nécessaire, la non déformation radiale et la déformation dans le plan axial de cette bague, c'est à dire que cette forme minimise la déformation de la partie centrale de la bague mais favorise la déformation des lèvres externes pour dégager au maximum les ouvertures.

L'épaisseur des ailes est décroissante depuis la partie centrale.

L'avantage important de cette solution technique résulte de la possibilité de multiplier dans l'enveloppe de la pièce cylindrique le nombre de découpes pour le passage du fluide, cet ensemble de découpes étant contrôlé par un seul obturateur qui est peu encombrant.

Le passage est constitué par une multiplicité de découpes.

On constate que la perte de débit est largement inférieure à 50 % et s'approche de 30 % ce qui est un point essentiel.

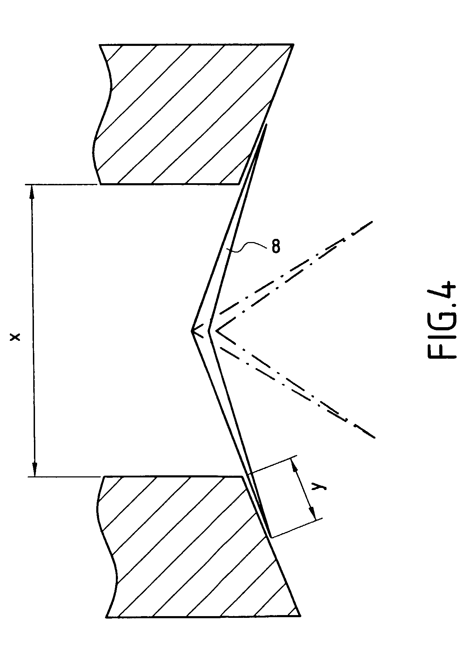

On a représenté, en figure 4, un exemple de courbe débit/pression pour un montage semblable à celui de la figure 1.

La courbe supérieure représente le débit sans la présence du clapet et la courbe inférieure le débit avec le clapet.

A une pression de cinq bars, la perte est de 28 %, à deux bars, la perte est de 35 % , la pression d'ouverture est de dix millibars.

En figure 4 , on a représenté à plus grande échelle, le clapet sur son siège et en traits mixtes, le clapet écarté de son siège.

On constate que, pour permettre une large ouverture, l'extrémité des lèvres qui s'appuient sur le siège est d'étendue réduite par rapport à l'étendue de l'ouverture de manière à dégager une large ouverture.

Le rapport y/x est compris entre 0,3 et 0,5 et, de préférence, il est de 0,4.

L'épaisseur des lèvres étant faible par rapport à la dimension x de l'ouverture et ces lèvres se rabattant l'une sur l'autre, cela dégage suffisamment de passage.

L'ouverture du Vé de 130° contribue également à cette faible perte de débit.

Egalement, on simplifie la fonction clapet qui se limite à la forme de la zone annulaire et à l'utilisation d'une bague complétée éventuellement par un jonc.

Ce clapet est parfaitement adapté aux transferts de flux radiaux.

Cette pièce cylindrique équipée de la bague est avantageusement une partie d'une chambre d'un dispositif quelconque comprenant une chambre interne et une chambre externe coaxiale entourant cette chambre interne.

La pièce cylindrique 8 constitue localement une paroi de séparation entre deux chambres coaxiales.

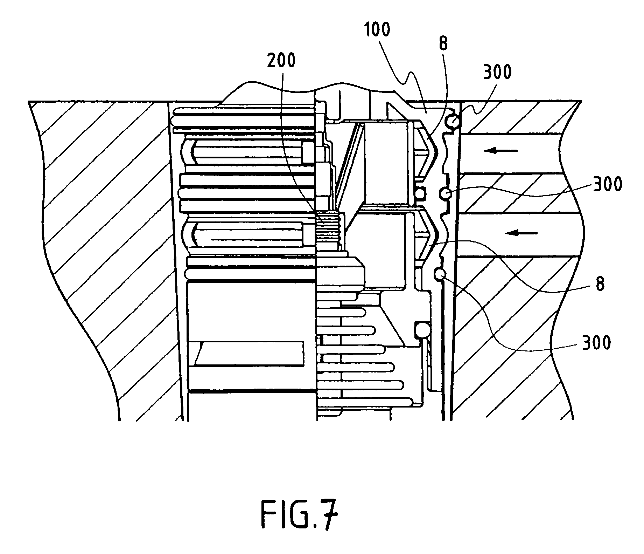

En figure 7, on a représenté, en coupe partielle, un robinet à cartouche thermostatique montrant deux clapets 2 selon l'invention. Ceux-ci sont montés sur une chemise 100 logeant un élément 200 thermostatique.

Des joints toriques 300 délimitent des chambres dans lesquelles aboutissent les canalisations d'eau chaude et d'eau froide.

## Revendications

1. Clapet anti-retour pour le contrôle du passage d'un fluide comprenant:
- un obturateur (2) se présentant sous la forme d'une bague (2) en matériau souple, située au regard d'une zone (7) annulaire d'une pièce (8) cylindrique de révolution, cette zone annulaire présentant, quant à elle, l'orifice (4) de passage du fluide ainsi que le siège (3) de l'obturateur de sorte que, lorsque la bague est déformée sous l'action du fluide, celle-ci s'écarte au moins localement de son siège afin que le fluide traverse radialement l'enveloppe de la pièce cylindrique,
- un moyen moteur, tel un moyen élastique, qui développe une force prédéterminée pour appliquer l'obturateur sur son siège et le maintenir en position fermée, et
- cette enveloppe cylindrique présentant des moyens (9) pour maintenir la bague en regard de la zone annulaire tout en lui permettant de se déformer au moins localement,
ce clapet étant **caractérisé** en ce que la bague (2) comprend une zone (2A) médiane faiblement déformable et de part et d'autre de cette zone médiane deux lèvres (2B) formant un Vé qui, sous l'effet de la pression du fluide, se déforment en modifiant ainsi l'ouverture du Vé qui, au moins localement, s'écartent du siège pour laisser circuler au moins 50 % du débit du fluide en amont du clapet.

2. Clapet selon la revendication 1 **caractérisé** en ce que la bague (2) constituant l'obturateur est logée à l'intérieur de la pièce (8) cylindrique de révolution et est maintenue en regard de la zone annulaire par deux portées (13A) d'appui qui, depuis la face interne (10) de la pièce cylindrique, s'étendent vers l'axe de révolution de la pièce cylindrique pour former une gorge en Vé ouverte vers l'intérieur de la pièce cylindrique.

3. Clapet selon la revendication 2 **caractérisé** en ce que l'ouverture (4) pour le passage du fluide est présentée par le fond d'une rainure (11) circulaire réalisée depuis la face interne de la pièce cylindrique.

4. Clapet selon la revendication 1 **caractérisé** en ce qu'un jonc (14) formant un anneau rigide s'appuie au niveau de la zone médiane de la dite bague et permet de limiter la déformation de cette zone médiane.

5. Clapet selon la revendication 1 **caractérisé** en ce que la bague a une section en Vé dont la pointe est tournée vers la face externe de la pièce cylindrique et l'épaisseur des ailes est décroissante depuis la partie médiane.

6. Clapet selon la revendication 1 **caractérisé** en ce que la forme de la section de la bague et la nature du matériau sont choisies pour combiner la déformation radiale et la déformation dans le plan axial de cette bague.

7. Clapet selon la revendication 1 **caractérisé** en ce que la perte de débit est de l'ordre de 30 %.

8. Clapet selon la revendication 1 **caractérisé** en ce que le passage est constitué par une multiplicité de découpes.

9. Clapet selon la revendication 1 **caractérisé** en ce que la pièce cylindrique (8) constitue localement une paroi de séparation entre deux chambres coaxiales.

10. Clapet selon la revendication 9 **caractérisé** en ce que la pièce cylindrique loge une cartouche thermostatique pour un robinet.
